# EUROPEAN PATENT APPLICATION

(11) **EP 4 842 020 A1**
(43) Date of publication of application: **18.11.2026**
(21) Application number: 25176696.0
(22) Date of filing: 15.05.2025
(51) Int. Cl.: H04W 4/50, H04L 41/0806, H04W 4/80, H04B 3/54, H04L 9/40

(54) **POWER CONNECTION ON-BOARDING**

(71) Applicant: Koninklijke Philips N.V., 5656 AE Eindhoven (NL)
(72) Inventor: VAN DEN DUNGEN, Wilhelmus Andreas Marinus Arnoldus Maria, Eindhoven (NL); VAN ACHT, Victor Martinus Gerardus, Eindhoven (NL); DRAAK, Johannes Wilhelmus, Eindhoven (NL)
(74) Representative: Philips Intellectual Property & Standards

(57) **Abstract**

There is provided, a method of commissioning an enrolee device by a commissioning-initiating device. The method is arranged to enable the enrolee device to connect to a wireless network and the commissioning device has a connection to the wireless network and is arranged to provide power to the enrolee device via a wired power connection. The method comprises by the enrolee device, entering into a configuration mode, by the commissioning device, at least one of detecting and causing, an event on the power connection, transmitting, wirelessly, by the enrolee device, a join-request message, wherein the join-request message comprises a plurality of codes, by the commissioning device, detecting the join-request message, in response to registering the power event and detecting the join-request message, transmitting, by the commissioning device to the enrolee device, a selection signal via the power connection, the selection signal indicating a selected code from the plurality of codes, by the enrolee device, using the selected code to join the wireless network. There is also provided commissioning and enrolee device, accordingly arranged.

## Description

### FIELD OF THE INVENTION

The present invention relates to commissioning (or on-boarding) of devices into an Internet-of-Things (IoT) network, particularly a local network such as a so-called 'smart home' network.

### BACKGROUND OF THE INVENTION

IoT networks often contain relatively simple devices which have specific simple tasks to perform, as opposed to networks purely comprising more general-purpose computing devices. In the case of smart home (or more generally smart building, since 'home' should be taken to include all manner of buildings), such simple devices may be things like temperature sensors, ventilation/air-conditioning controls, lighting devices, window opened/closed sensors, actuators for window coverings and so on.

IoT networks often contain devices for control and/or coordination, such as hubs, routers or gateways. These hubs/gateways/routers have more complex functionality and greater computing power.

Networks usually require a procedure called commissioning or on-boarding in order to connect a new device to the network (or to allow it to join the network, in other words). The commissioning process involves providing the new device with the necessary cryptographic keys (setting up the necessary suite of these keys), giving the new device an identity, establishing the characteristics and function of the new device etc. The simple devices, having less computing complexity/flexibility and (often) no user interface (UI), require protocols, appropriately adapted, for being commissioned.

Further, it is necessary to ensure that only desired devices are included in the network and that a new device is not connected to the wrong network because failure to do so may present a security risk for the network. To this end, a part of the commissioning process involves verifying the identity of the new device by the network and vice-versa - otherwise known as establishing trust.

### SUMMARY OF THE INVENTION

Thus there is a need to provide a method of connecting new devices to networks in a convenient yet secure way.

The invention is defined by the appended claims, wherein methods, devices and computer program products are provided.

In an aspect of a method of commissioning an enrolee device by a commissioning-initiating device into a network, wherein the commissioning device and the enrolee device are each arranged to have connection to a communication link and wherein the commissioning device is arranged to provide power to the enrolee device via a power connection, the power connection being a wired power connection, the method may comprise by the enrolee device, entering into a configuration mode, by the commissioning device performing at least one of detecting and causing an event on the power connection, by the enrolee device, transmitting a join-request message via the communication link, wherein the join-request message comprises a plurality of codes, by the commissioning device, receiving the join-request message, by the commissioning device, in response to registering the power event and detecting the join-request message, transmitting to the enrolee device, a selection signal via the power connection, the selection signal indicating a selected code from the plurality of codes, then, by the enrolee device, using the selected code to join the network.

The method has the advantage of convenience, particularly for inexperienced users and particularly for simple (or headless) new devices. In other methods, the user must perform various manual operations and be physically near the new device, both of which may present their own problems, such as being unsure how to complete the operations or whether the process is going as planned or finding the physical access itself problematic. In the proposed process, the configuring of the new device for joining the network is, from the point of the user, automatic and the user does not need to remain at hand. Because the selection of the code is transmitted along the power connection, rather than the means used for transmission of the join-request (i.e. the communication network), eavesdroppers will find it hard to ascertain what the actual code is - two transmission means will have to be monitored and picking the power connection signal from any distance will be awkward.

According to an embodiment, the communication link may be an ad-hoc network.

According to an embodiment, the join-request message may comprise a series of time-slots and a different code of the plurality of codes is transmitted in each time-slot. The selected code may be the code transmitted in the time-slot in which the selection signal is transmitted. The use of a plurality of different codes will make it harder for the eavesdropper to identify the correct code.

According to an embodiment, the plurality of codes may be generated using a pseudo-random number generator, making the risk of re-use of a code lower.

In embodiments, the join-request message comprises a time value transmitted in each time-slot, wherein the time value indicates a timestamp of the power event. The time value (time-stamp) may be used by the commissioning device to verify that the join-request has come from the device it thinks it is talking to.

According to embodiments, the event may be associated with a start of power consumption by the enrolee device and/or a transmission, by the commissioning device, of a configuration-enable signal via the power connection. Furthermore, the configuration-enable signal may cause a plurality of enrolee devices to enter the configuration mode.

In an aspect, a commissioning device is arranged to communicate in a communication network, wherein the commissioning device is arranged to supply power to power to second device via a wired power connection, wherein the commissioning device is arranged to communicate via a communication link. The commissioning device may comprise a first transceiver arranged to receive a message via the communication link, processor arranged to decode a join-request signal, the join-request signal comprising a sequence of codes, the sequence being arranged in time-slots, a second transceiver arranged to transmit, to the second device, a first signal via the power connection, a storage module arranged to store the code received in the time-slot in which the signal is transmitted, as being a selected code, wherein the first signal is arranged to cause the second device to use the selected code to commence a further phase of a commissioning protocol.

In an aspect, an enrolee device is arranged to communicate via a network, wherein the enrolee device is arranged to receive power from commissioning device via a wired power connection, may comprise a first transceiver module arranged to transmit a join-request signal, wherein the join-request signal comprises a sequence of codes arranged in time-slots, a second transceiver module to receive a first signal via the power connection, a processor arranged to cause the enrolee device to enter a configuration mode in dependence on an event on the power connection, to cause the first module to transmit the join-request signal in dependence on the enrolee device being in configuration mode, to store the code transmitted in the time-slot in which the enrolee device received the first signal and to use the stored code in a subsequent phase of the commissioning process.

### BRIEF DESCRIPTION OF THE DRAWINGS

The above, as well as additional objects, features and advantages of the disclosed devices, systems and methods, will be better understood through the following illustrative and non-limiting detailed description of embodiments of devices and methods, with reference to the appended drawings, in which:
Fig. 1 illustrates an example of an IoT network in which embodiments of the present disclosure may be implemented.
Fig. 2 illustrates a part of a network where devices are connected by power connections and in which embodiments may be implemented.
Figs. 3a and 3b illustrate commissioning (or configuring) protocols.
Fig. 4a illustrates a format of a join-request message according to an embodiment.
Fig. 4b illustrates formats of signalling along a power connection.
Figs. 5a and 5b illustrate initial phases of commissioning protocols according to embodiments.
Fig. 6 illustrates a commissioning protocol according to an embodiment for multiple enrolee devices.

### DETAILED DESCRIPTION OF EMBODIMENTS

In the following description, same references designate like or analogous elements.

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. After reading the description, it will be apparent to one skilled in the relevant art how to implement alternative embodiments. The present embodiments may not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages are presented for example purposes only. The disclosed architecture is sufficiently flexible and configurable, such that it may be used in ways other than those shown. For example, the actions listed in any flowchart may be re-ordered or only optionally used in some embodiments.

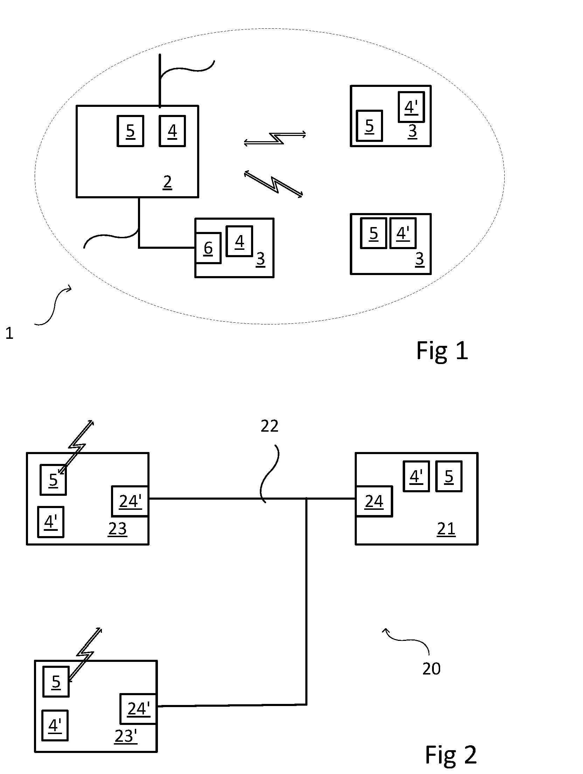

Fig. 1 represents an example of an communication network 1 - such as an Internet-of-Things (IoT) network - in which embodiments of the present disclosure may be implemented. The network 1 comprises a first node or device 2 and other devices 3. In the present example, the IoT network 1 uses wireless communications, though other means, such as ethernet or power-line communications, are possible. The first node or device 2 may be arranged to act as a hub, a gateway, an access point, a coordinator or a gateway or may even combine more than one of these functions or indeed other functions such as control of the overall network. For convenience, device 2 will be henceforth referred to as a hub, though it should be understood that other device types are intended. The hub 2 comprises a processor 4 and may comprise a communication module (or 'transceiver') 5. The other devices 3 are so-called IoT devices i.e. they are simpler devices, and they comprise respective processors 4' and transceivers 5. The processors 4' (and indeed, the transceivers 5) of the IoT devices may be suitably adapted to the functional requirements of the IoT device in question. In a variant, some or all of the functionality of the hub 2 may be implemented in software modules resident in some or all of physical devices, such as the other (IoT) devices 3 of the network; as such, the hub 2 may be considered to be a virtual device. As may be understood, in the case of a wire-based network - such as ethernet - the communication modules 5 would be adapted for such a means of communication.

Fig. 2 represents an example of a part 20 of an IoT network according to an embodiment. A power supply device 21 is provided with IoT functionality in that it comprises a processor 4' and, in this example, a transceiver 5. It should be noted that the transceiver 5 could also be something like an ethernet port. The 'power supply', might be any device providing power; for example, a power supply/regulation device or power outlet such as a wall socket. The power supply 21 is coupled, via a wired power connection 22, to one or more IoT device 23, 23'. The IoT devices 23 comprise processors 4' and, in this example, transceivers 5. The transceivers 5 (or indeed communication modules) of the IoT devices and the power supply 21 may also be arranged to establish a communication link such as an ad-hoc network between an IoT device and the power supply 21.

In a variant, the power supply 21 may be equipped with a module 24 connected to its end of the power connection 22. The module 24 may be arranged to detect and/or cause events on the power connection 22. In a variant, the power-supply 21 and the IoT devices 23 may be equipped with power-line modules 24 and 24'. As such, these modules 24 and 24' act as transceivers.

In a variant, the power-line modules 24' may be arranged to detect variations in the voltage or current on the power connection 22. In an further variant, the power-line modules 24' may be (also) arranged to act as power-line modems. In corresponding variants, the power-line modules 24 may be arranged to add variations in the voltage and/or current to power connection 22 or be enhanced to perform as power-line modems.

In an embodiment, it is arranged the IoT device starts up in a mode where it can only perform the functions necessary for commissioning. This could help avoid the power supply device 21 inadvertently causing the IoT device to execute an undesirable action during the on-boarding/commissioning process - some IoT devices have high-power functions so this security feature may be desirable. In a variant, the IoT device is powered up only by a charge storage device (e.g. a capacitor or battery), suitably dimensioned for powering up the processer and any communication modules.

In order to establish trust between the IoT network 1 and a new device, some local network technologies use procedures such as reading information from a QR-code associated with the new device (e.g. on the device or packaging). Other possibilities for this process include using a short-range wireless link such as Near-Field Communications (NFC) or Bluetooth^{™} Low Energy (BLE). This initial process is sometimes called "bootstrapping" and is often used for passing initial credentials (or secrets) from the network to the new device or even exchanging initial credentials/secrets between the two parties. This process may also be considered to be part of a device discovery phase. The secret(s) are then often used to derive cryptographic keys for subsequent communication whereby the new device is configured (often referred to as being 'provisioned') for joining/being enrolled in the IoT network. It is often the case that the means used for the bootstrapping phase differ from the technology actually used for operational communications in the network. As such, they are termed "out-of-band" (OOB).

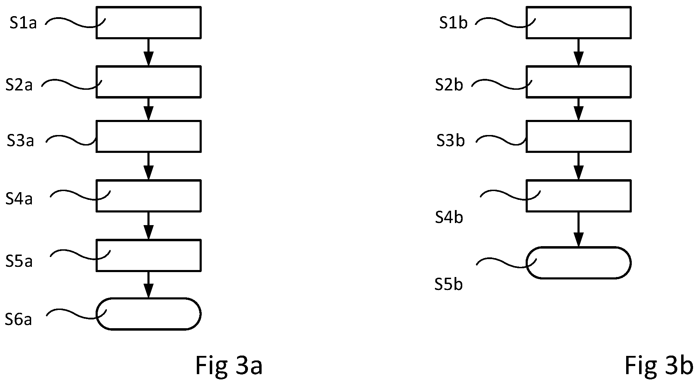

Fig 3a shows a commissioning process used in CSA Matter. At S1a, the enrolee device (or 'Commissionee' in Matter terminology) provides the commissioning device with a secret, referred to as a 'passcode' using an OOB technique. At this stage, there is device discovery, where the enrolee sends an advertisement (or announcement) which contains a value, called a Discriminator and may include a device ID, a vendor ID and product information. The Discriminator is a passcode and may be used by a commissioning device to distinguish between multiple commissioning advertisements.

At S2a, this phase is followed by a process called 'Passcode-Authenticated Session Establishment' (PASE) where the secret (obtained using the OOB technique, above) is used to derive the session keys, using SPAKE2+ (an augmented passcode-authentication key exchange protocol). The session key is used to set up a temporary encrypted connection or session.

At S3a, the PASE session is used for a sharing of credentials where the enrolee device has its authenticity (as being a certified Matter device) checked by the commissioner and then acquires/is attributed an identifier called the Node ID and certain certificates.

After this, at S4a, the enrolee device attempts to join the network in, what is called an "Operational Discovery' phase.

At S5a, the certificates are then used for a 'Certificate Authenticated Session Establishment" where encryption keys are generated to be used to encrypt the network communications to and from the newly commissioned enrolee device.

Eventually, the enrolee device is joined to the network with all the security in place and commissioning is complete at S6a.

Fig 3b represents a flow according to another commissioning process (or protocol) is Wi-Fi Alliance Device Provisioning Protocol (DPP) - otherwise known as "Wi-Fi Easy Connect'. DPP is used for commissioning devices ('enrolees' in DPP terminology) for connection to Wi-Fi (IEEE 802.11) networks. As with CSA Matter, there is an initial phase (called 'bootstrapping') at S1b, which is (frequently) performed using an OOB means. These OOB means include scanning of a QR-code associated with enrolee by the commissioning device (called a 'configurator' in DPP). Other means include NFC and BLE. In all cases, during the bootstrapping, the configurator obtains the enrolee's public bootstrapping key and other information such as preferred Wi-Fi channels.

At S2b, the enrolee public bootstrapping key is then used as part of the authentication process (to calculate ephemeral keys) which completes the establishment of trust. In this phase, one party (e.g. the configurator) initiates the authentication process by sending request for authentication message containing, amongst other things, hashes of the enrolee public bootstrapping key and its own public bootstrapping key, its public 'protocol' key and a first nonce encrypted using an ephemeral key derived from the enrolee public bootstrapping key. The other device replies with a message containing, among other things, a hash of the enrolee public bootstrapping key, the first nonce concatenated with a second nonce encrypted with another ephemeral key to form an authentication token. The request and responses serve to prove to the other device that they are 'talking' to each other and not some other (malicious) device.

At S3b, once authentication is complete, a configuration phase ensues where the enrolee receives a data object containing information on the network (SSID etc.) and an object called a 'connector', from the configurator and signed by the configurator using a signing key.

At S4b, the connector is used by the enrolee to prove it has been authenticated by the configurator as part of joining the Wi-Fi network. The enrolee performs the Wi-Fi joining process with, for example, and access point (AP) indicated in the configuration information, using the IEEE 802.11 joining protocol.

At S5b, the commissioning is complete.

The bootstrapping phase of technologies such as CSA Matter and DPP (mostly) require a degree of physical proximity between the new device and either one or both of a person and a device performing the commissioning (or at least the initial phases of the commissioning). This physical proximity has the advantage of guaranteeing, to a degree, that credentials/secrets which are exchanged do, in fact, belong to the intended new device and the intended IoT network - in other words, it serves in the establishment of trust. Thus, the IoT network 'knows' that it is 'talking' to the correct device and not some (probably malicious) interloper which has inserted itself into the commissioning communications by a 'man-in-the-middle' attack.

Thus, after trust has been established, the commissioning may continue. The physical proximity-based approach has the drawback that it may be cumbersome. The process is very 'hands-on' and the person executing the commissioning will often have to change location - this can result in quite a lot of walking. The place where the enrolee device is to be installed may not be in an easily reachable location, making reading a QR-code or placing a short-range transceiver (e.g. NFC) within range awkward. Where there are many devices to be commissioned, the overall time required may become burdensome because the time required for each device is quite long - often of the order of minutes. Further, in the case where the network is in a domestic setting, i.e. a smart home, the users may be uncomfortable with the prospect of running the commissioning process. Therefore, it is desirable to achieve the establishment of trust to the level offered by the physical proximity but in a more automated, convenient way.

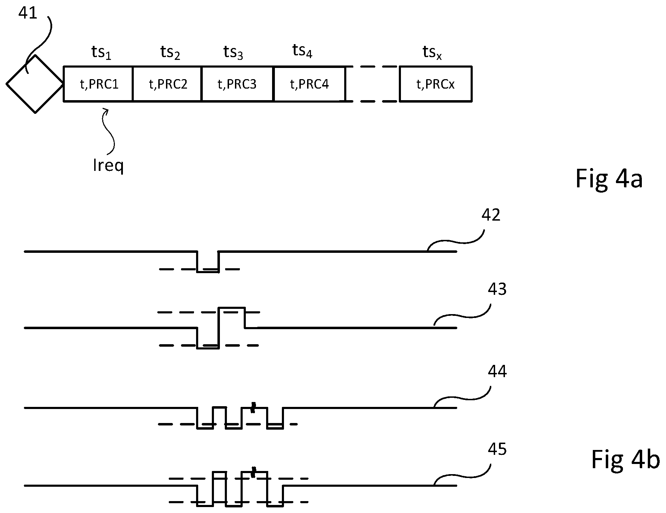

Fig. 4a represents a format of an initial message Ireq, according to an embodiment, sent by an enrolee device to advertise that it is requiring commissioning. Since the purpose of message is to obtain commissioning, it is an initial request and, since the initial request message is not addressed to a particular device, it may be considered to be a beacon. This initial request message Ireq could be sent via a wireless technology such as Bluetooth^{™} Low Energy (BLE) or Near-Field Communications (NFC) or, equally, via a cable connection such a ethernet, according to the capabilities of the devices involved. This initial request message is also sent in the clear i.e. unencrypted. At a time t0 41, a start of transmission of the message occurs. The message may be divided into a series of time-slots ts₁ - tsₓ,. In each time-slot, the message contains an individual code i.e. each time-slot in a given sequence should contain a different code and may contain a time-stamp. A good way to achieve the different codes is to use pseudo-random codes (PRC) thus the sequence is PRC1 - PRCx. The beacon Ireq may optionally contain other information such as one or more identifiers, such as those relevant to the IoT network 1 or to the device itself (e.g. a device model number, serial number, or a part thereof). Advantageously, each code (or PRC) is unique to its time-slot, at least within one execution of the process. As will be explained below, the code/PRC in each time-slot may be used in a process or protocol for initiating the commissioning or on-boarding.

Fig. 4b represents variants of a power supply signal which may be transmitted on the power connection. In variant 42, the power supply voltage has a negative pulse applied, the negative pulse dropping below a threshold at which a receiving device will recognise the pulse as valid (as opposed to being an unrelated supply variation). In variant 43, both positive and negative pulses are applied, both crossing defined thresholds so as to be recognised as valid. Variants 44 and 45 may have pulse trains of the pulses of variants 42 and 43 respectively. In a further variant, more complex signals may be used to transfer data. It should be understood that the present illustration concerns a DC (e.g. regulated) supply and that voltage changes are imposed on the DC supply voltage. In certain implementations, the signaling may be achieved by varying the supply current. In a situation where the supply is AC - 230V AC, for example, the signal would be imposed on the AC voltage. Various possibilities exist for this such as chopping parts of the 50Hz cycle or imposing voltage changes with a high dV/dt so that the signal and supply could be separated by filtering on the receiving side - high-pass to select the signal and low-pass to feed the supply to rest of the enrolee device 23.

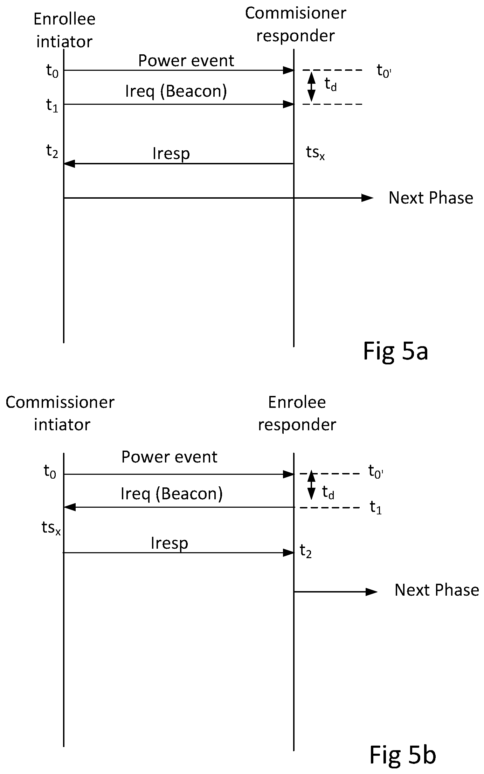

Fig. 5a represents a process of completing the initial phase of the establishment of trust, or bootstrapping, according to an embodiment applicable to the arrangement of Fig. 2 and using the embodiment of a beacon message format of Fig. 4a and the power supply signal of Fig. 4b, described below. An IoT device 23 is ready to be enrolled in the IoT network 1 - i.e. it is an enrolee. At the start, the enrolee device 23 is powered on (e.g. the IoT device, such as a lamp, is coupled to the power or plugged in) - possibly in a reduced-capability mode. The enrolee device 23 enters a configuration (or commissioning) mode, whereby it may be configured for joining a network, and registers this time as t0. The power supply device 21 detects this as a power event and registers the time at which this occurs; the power supply device 21 takes this value as 'its t0' i.e. t0'. The enrolee device 23, as part of its configuration mode, starts emitting a message to advertise itself and, effectively, request on-boarding or commissioning. The message is, in effect, an initial request and, since it is not addressed to any specific device, may be considered as a beacon. The enrolee device 23 uses the time t0 (when it entered commissioning mode and began transmission of the beacon Ireq) as the value of the time-stamp t transmitted in each time slot of the beacon Ireq. The power supply device 21 may then decode the beacon Ireq (which is in the clear) and verify that the value of to reported in the beacon corresponds to t0'. If the values correspond within an acceptable limit i.e. t_{d} is below a certain threshold, the power supply device 21 considers that it is communicating with the 'correct' enrolee device 23 i.e. the beacon Ireq did come from the enrolee device 23 coupled to the power connection 22 and not some unconnected device, say in another IoT network. Then, at a time corresponding to time slot x (i.e. tsₓ), the power supply device 21 sends a power supply signal Iresp such as one of the ones represented in Fig. 4b. The enrolee device 23 receives the power supply signal Iresp and registers which time slot was chosen hence the code/PRC that was sent in the time slot in question. Both devices then know which code/PRC has been selected and to use going forward - they have effectively agreed upon the code. Thus, the power supply signal Iresp acts as a selection signal. The agreed code/PRC is then used as the passcode for the next stage of the commissioning process. Even though the beacon Ireq, with the potential passcodes was sent in the clear, only devices coupled to the power connection 22 are able to work out which PRC was used for the passcode. This helps reduce the risk that a malicious device can overhear the beacon Ireq and use one of the codes/PRCs as a passcode to try to join the IoT network 1. It is desirable, from the point of view of network security, that the enrolee to be close the moment at which it enters configuration mode and that transmission of the beacon Ireq commence soon afterwards (e.g. a few milli or micro-seconds) because having it in configuration mode too long might allow a malicious device time to interfere with the commissioning process.

Thus, by way of summary, there is a method of commissioning an enrolee device by a commissioning device to enable the enrolee device to connect to a network, wherein the commissioning device and the enrolee device are each arranged to have connection to a communication link and wherein the commissioning device is arranged to provide power to the enrolee device via a power connection, the power connection being a wired power connection. The method comprising by the enrolee device, entering into a configuration mode, by the commissioning device, at least one of detecting and causing, an event on the power connection, transmitting, via the communication link, by the enrolee device, a join-request message, wherein the join-request message comprises a plurality of codes, in response to registering the power event and receiving the join-request message, transmitting, by the commissioning device to the enrolee device, a selection signal via the power connection, the selection signal indicating a selected code from the plurality of codes, and by the enrolee device, using the selected code to join the wireless network.

The commissioning device may be arranged to communicate in a network, wherein the device is arranged to supply power to power to second device via a wired power connection and is arranged to communicate via a communication link. The commissioning device comprises a first transceiver arranged to receive a join-request signal via the communication link, a processor arranged to decode the join-request signal, the join-request signal comprising a sequence of codes, the sequence being arranged in time-slots, a second transceiver arranged to transmit, to the second device, a first signal via the power connection, a store arranged to store the code received in the time-slot in which the signal is transmitted, as being a selected code.

The enrolee device may be arranged to communicate via a network, wherein the enrolee device is arranged to receive power from commissioning device via a power connection and is arranged to participate in a commissioning process and wherein the enrolee is arranged to communicate via a communication link. The enrolee device comprises a first transceiver arranged to transmit, via the communication link, a join-request signal, wherein the join-request signal comprises a sequence of codes arranged in time-slots, a second transceiver to receive a first signal via the power connection, a processor arranged to cause the enrolee device to enter a configuration mode in dependence on an event on the power connection, to cause the first transceiver to transmit the join-request signal in dependence on the enrolee device being in configuration mode, to store the code transmitted in the time-slot in which the enrolee device received the first signal and to use the stored code in a subsequent phase of the commissioning process.

In the case of an IoT network 1 according to CSA Matter, the enrolee device 23 and commissioning device may use the passcode for the PASE phase of phase S2a above. In one variant, the where the power supply device the power supply device 21 acts as the commissioning device - this may be convenient since it already knows the passcode and saves it having to send the passcode to another device. In another variant, the power supply device 21 provides the passcode to another device, in the local network, which acts the commissioning device. In this situation, it is desirable that the passcode be provided to the commissioning device via a secure channel - for example, an encrypted transceiver or power-line communication or even ethernet (should the power-supply device 21 have an ethernet connection). In either case, it is desirable for the commissioning device to be already connected to the local network so that it may provide any outcomes of (the commissioning device part of) the commissioning process to the local network. It may be useful for the commissioning device to 'instruct' the power supply device to send the initiating power supply signal, as in the embodiment of Fig. 3b.

In the case of a Wi-Fi network using DPP commissioning, the passcode may be used as the enrolee public bootstrapping key, acquired in the bootstrapping phase S1b above. Since the public bootstrapping key is part of a Diffie-Hellman pair, the enrolee should be equipped to generate an associated private bootstrapping key. Various possibilities for this exist. In one variant, the enrolee product is pre-provisioned with a set of stored key pairs of which it then transmits the public keys in a sequence, possibly randomised. This has the advantage of requiring less computational power in the enrolee but does require enough memory to store a reasonably large set - enough to avoid recycling the keys in a normal life of being configured and re-configured. Another possibility is that the enrolee, upon entering commissioning mode each time, calculates a set of key pairs, using a PRN as part of the process to reduce the risk of repetitions between cycles of generating sets.

In an embodiment, the power supply device 21, upon registering the power event, generates a code. This may be a PRN. The power supply device 21 stores the code and sends this code, via the power connection 22, to the enrolee device 23. This code may be sent along with the selection signal Iresp or shortly afterwards. The enrolee device combines this code with the selected PRN to generate the passcode that will be used going forward. The power supply device 21 performs the same combination. If the power supply device 21 is going to complete the commissioning i.e. perform the subsequent phases, it merely uses the combined code. Where another device takes over the next phase, the power supply device 21 provides the combined code to that device, using a secure means, such as an ethernet connection or an encrypted wireless link. The combination may be concatenation or some more complex mathematical operation. Because the actual passcode is never transmitted wirelessly in the clear, the risk that a malicious device has been listening long enough to overhear all the possible passcodes and trying to enter the network by brute force i.e. repeatedly attempting is reduced. This may be useful for an enrolee device which has only a limited set of codes for use as the passcode. Such a situation may arise with very low-cost devices. It is useful to understand that the risk a hackable device poses is not just to the device but the network as a whole.

Fig 5b represents another embodiment. At a time t0, the power supply device 21 triggers a power event by sending a signal on the power connection 22. The signal may be according to one of the variants shown in Fig. 4b. The effect of the power event is to cause the enrolee device to enter its configuration mode - the enrolee device 23 registers the time of entering configuration mode as t0', The enrolee then starts transmitting a beacon Ireq according to the embodiment of Fig. 4a, with t0'as the value of the time stamp in each slot. As with the embodiment of Fig. 4a, the commissioner (i.e. the power supply device 21) sends a signal Iresp via the power connection 22, the signal Iresp indicating to the enrolee device which code/PRC has been selected for the next phase of the commissioning process. For this embodiment, it is useful that the commissioning device check the time difference t_{d} between the time to of the power event and the value of the time t0' it receives in the beacon Ireq is within an acceptable limit. This embodiment may be used advantageously for re-commissioning - for example, if an upgrade to the security is desired or if problems have been detected with the device 23 - without needing a manual intervention to force the enrolee device 23 back into configuration/commissioning mode.

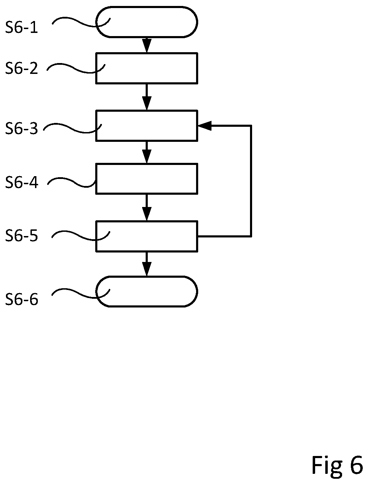

Fig. 6 represents an embodiment, based on the embodiment of Fig. 5b. At S6-1, the power supply device 21 initiates the commissioning process for multiple enrolee devices 23, 23' (from the example of Fig. 2) substantially at the same time. At S6-2, the enrolee devices 23, 23' start to emit their respective beacons Ireq at about the same time. A convenient approach is to have the enrolee device 23, 23' use a carrier-sense (CS) mechanism which results in all but one of the enrolee devices using a backoff procedure to suspend, temporarily, their transmissions. It is also useful to have the enrolee devices which suspend beacon transmissions also to ignore any power signals Iresp they may detect. At S6-3, an enrolee device 23 wins access to the medium and transmits its beacon Ireq. At S6-4, the power-supply device 21 sends a signal Iresp on the power connection 22. The enrolee device 23 which is transmitting the beacon Ireq receives this signal and logs the code/PRC and proceeds to the next phase of the commissioning, as described before.

Once the enrolee device 23 which was transmitting a beacon Ireq has logged a selection of the code/PRC, it may stop transmitting. Then, at S6-5, the remaining enrolee device(s) 23' may contend for the medium in order to transmit their respective beacons Ireq and another enrolee device 23' wins access to the medium and the process returns to step S6-3. Eventually, when all the enrolee device 23/23' have been commissioned, the process stops at S6-6.

In a variant where the power supply device is performing the subsequent commissioning phase(s), the power supply device 21 may be arranged to ignore any beacons from the other enrolee devices whilst it is performing the commissioning with one enrolee device i.e. the commissioning is completed one device at a time. Whilst this is occurring, the other enrolee devices 23' may be arranged to behave in various ways. In one variant, the enrolee device 23' which wins the medium continues to transmit its beacon Ireq until the power supply device 21 sends an Iresp signal - since it is transmitting its beacon, it assumes the Iresp signal is intended for it. In another variant, each would-be enrolee device 23' transmits its beacon in bursts, remaining silent in between bursts, resulting in a sort of randomised round-robin between the enrolee devices 23'. An advantage of the using the bursts is that each beacon is transmitted for a limited amount of time, reducing the opportunity for malicious devices to log the codes in preparation of a later brute-force attack. This may be useful for enrolee devices which cannot generate a wide range of codes i.e. there is a risk of sending all the codes.

In a variant where the power supply device 21 is only involved in the setting of the passcode (as described in relation to Fig. 5g) for the subsequent phase - and hands over to another device for that subsequent phase - it may be convenient to arrange the power supply device 21 to complete the passcode setting for each enrolee device 23/23'as soon as it can (as opposed to waiting for the complete commissioning of each enrolee device).

Each enrolee device 23/23' will be, in the end, configured with its own connection to the network i.e. it will have its own set of encryption keys. Therefore, even though multiple enrolee devices have been commissioned in a batch, their final connections to the network will remain individual and they will be individually addressable.

In a variant, the enrolee device 23 may be arranged to include an identifier along with each timestamp and code. For example, this could be part of the device serial number. This might be useful for situations where it is desired to know to keep a track of which enrolee is associated with which new connection to the network. For example, this may serve to make more efficient a subsequent network mapping operation such as where network devices are given names or roles which are human-understandable.

Thus, by way of a summary, the method of commissioning an enrolee device by a commissioning-initiating device (the method being arranged to enable the enrolee device to connect to a wireless network, the commissioning device having a connection to the wireless network and being arranged to provide power to the enrolee device via a power connection and the power connection being a wired power connection) comprises by the enrolee device, entering into a configuration mode, by the commissioning device, at least one of detecting and causing, an event on the power connection, transmitting, wirelessly, by the enrolee device, a join-request message, wherein the join-request message comprises a plurality of codes, by the commissioning device, detecting the join-request message, in response to registering the power event and detecting the join-request message, transmitting, by the commissioning device to the enrolee device, a selection signal via the power connection, the selection signal indicating a selected code from the plurality of codes, then by the enrolee device, using the selected code to join the wireless network.

In variant, the join-request message may comprise a series of time-slots and a different code of the plurality of codes may be transmitted in each time-slot and the selected code is the code transmitted in the time-slot in which the selection signal is transmitted. Also, at least one code of the plurality of codes may be generated using a pseudo-random number generator. The join-request message may comprise a time value transmitted in each time-slot, wherein the time value indicates a timestamp of the power event.

The event may be associated with a start of power consumption by the enrolee device or may be a configuration-enable signal sent by the commissioning device.

Thus, the embodiments offer the features of OOB commissioning - namely, certainty that correct device is being on-boarded to the correct network - with the added advantages of convenience. By simply plugging the new IoT device in or switching it on (for a smart home situation), the commissioning can be initiated and completed without the need for manual intervention on the part of the user.

Embodiments may be configured to operate as needed. The disclosed mechanism may be performed when certain criteria are met, for example, in a station, an access point, a transceiver environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, may be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {STA1, STA2} are: {STA1}, {STA2}, and {STA1, STA2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that effect the operational characteristics of the device whether the device is in an operational or non-operational state. In other words, the hardware, software, firmware, registers, memory values, and/or the like may be "configured" within a device, whether the device is in an operational or non-operational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages/frames comprise a plurality of parameters, it implies that a parameter in the plurality of parameters is in at least one of the one or more messages/frames but does not have to be in each of the one or more messages/frames.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g., hardware with a biological element) or a combination thereof, which may be behaviourally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. It may be possible to implement modules using physical hardware that incorporates discrete or programmable analogue, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers, and microprocessors are programmed using languages such as assembly, C, C++, or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

Aspects of the embodiments may be implemented in a computer program product, which may be a collection of computer program instructions stored on a computer readable storage device which may be executed by a computer. The instructions may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A method of commissioning an enrolee device by a commissioning device, the method being arranged to enable the enrolee device to connect to a network, wherein the commissioning device and the enrolee device are each arranged to have connection to a communication link and wherein the commissioning device is arranged to provide power to the enrolee device via a power connection, the power connection being a wired power connection, the method comprising:
- by the enrolee device, entering into a configuration mode;
- by the commissioning device, at least one of detecting and causing, an event on the power connection;
- transmitting, via the communication link, by the enrolee device, a join-request message, wherein the join-request message comprises a plurality of codes;
- in response to registering the power event and receiving the join-request message, transmitting, by the commissioning device to the enrolee device, a selection signal via the power connection, the selection signal indicating a selected code from the plurality of codes;
- by the enrolee device, using the selected code to join the wireless network.

2. A method of commissioning an enrolee device by a commissioning device, the method being arranged to enable the enrolee device to connect to a local network, wherein the commissioning device and the enrolee device are each arranged to have connection to a communication link and wherein the commissioning device is arranged to provide power to the enrolee device via a power connection, the power connection being a wired power connection, the method comprising:
- by the enrolee device, entering into a configuration mode;
- by the enrolee device, transmitting, via the communication link, by the enrolee device, a join-request message, wherein the join-request message comprises a plurality of codes;
- by the enrolee device, receiving a selection signal via the power connection, the selection signal indicating a selected code from the plurality of codes;
- by the enrolee device, using the selected code to join the local network.cod.

3. A method of commissioning an enrolee device by a commissioning device, the method being arranged to enable the enrolee device to connect to a local network, wherein the commissioning device and the enrolee device each arranged to have connection to a communication link and wherein the commissioning device is arranged to provide power to the enrolee device via a power connection, the power connection being a wired power connection, the method comprising:
- by the commissioning device, performing at least one of detecting or causing an event on the power connection;
by the commissioning device, receiving from the enrolee device, via the communication link, a join-request message, wherein the join-request message comprises a plurality of codes;
- by the commissioning device, in response to receiving the join-request message and detecting or causing the power event, transmitting a selection signal via the power connection, the selection signal indicating a selected code from the plurality of codes.

4. The method of any of claims 1 - 3 wherein the communication link is an ad-hoc wireless network.

5. The method of any of claims 1 - 4 wherein the join-request message comprises a series of time-slots and a different code of the plurality of codes is transmitted in each time-slot.

6. The method of claim 5 wherein the selected code is the code transmitted in the time-slot in which the selection signal is transmitted.

7. The method of any of claims 1 - 6 wherein at least one code of the plurality of codes is generated using a pseudo-random number generator.

8. The method of any of claim 5 - 7 wherein the join-request message comprises a time value transmitted in each time-slot, wherein the time value indicates a timestamp of the power event.

9. The method of any preceding claim wherein the event is associated with a start of power consumption by the enrolee device.

10. The method of any of claims 1 - 9 wherein the event is a transmission, by the commissioning device, of a configuration-enable signal via the power connection, the configuration-enable signal causing the enrolee to enter the configuration mode.

11. The method of claim 10 wherein the configuration-enable signal causes a plurality of enrolee devices to enter the configuration mode.

12. The method of any of claims 10 or 11 wherein the event comprises a temporary reduction of the power supplied via the power connection.

13. The method of any of claims 10 - 12 comprising transmitting the first signal to a plurality of enrolee devices via the power connection, wherein the signal causes at least one of the plurality of enrolee devices to enter the configuration mode.

14. The method of any preceding claim comprising configuring of the enrolee device by the commissioning device.

15. The method of any preceding claim comprising configuring of the enrolee device by a third device.

16. The method of any preceding claim wherein the network conforms to the CSA Matter standard.

17. A commissioning device arranged to communicate in a network, wherein the device is arranged to supply power to power to second device via a wired power connection, wherein the commissioning device is arranged to communicate via a communication link, the commissioning device comprising:
- a first transceiver arranged to receive a join-request signal via the communication link;
- a processor arranged to decode the join-request signal, the join-request signal comprising a sequence of codes, the sequence being arranged in time-slots;
- a second transceiver arranged to transmit, to the second device, a first signal via the power connection,
- a store arranged to store the code received in the time-slot in which the signal is transmitted, as being a selected code.

18. The commissioning device of claim 17 comprising a processor arranged to perform at least one of detecting an event on the power connection, the event being caused by the second device, and transmitting a signal to the second device via the power-connection, wherein the first signal is arranged to cause the second device to enter a configuration mode.

19. The commissioning device of any of claims 17 - 18 wherein the device is arranged to perform at least one of sending the selected code to a third device in the network and completing, using the selected code, the commissioning protocol with the second device so as to configure the second device for communication in the network.

20. The commissioning device of any of claims 17 - 19 wherein the device is a power outlet.

21. The commissioning device of any of claims 17 - 20 wherein the device is a power supply arranged to supply power to a plurality of other devices and the signal is arranged to cause at least one of the plurality of other devices to enter and configuration mode.

22. The commissioning device of any of claims 17 - 21 wherein the device is arranged to conform to the CSA Matter standard.

23. An enrolee device arranged to communicate via a network, wherein the enrolee device is arranged to receive power from commissioning device via a power connection, wherein the enrolee is arranged to participate in a commissioning process, wherein the enrolee is arranged to communicate via a communication link, the enrolee device comprising
- a first transceiver arranged to transmit, via the communication link, a join-request signal, wherein the join-request signal comprises a sequence of codes arranged in time-slots;
- a second transceiver to receive a first signal via the power connection;
- a processor arranged to:
- to cause the enrolee device to enter a configuration mode in dependence on an event on the power connection;
- to cause the first transceiver to transmit the join-request signal in dependence on the enrolee device being in configuration mode;
- to store the code transmitted in the time-slot in which the enrolee device received the first signal
- to use the stored code in a subsequent phase of the commissioning process.

24. The device of claim 23 wherein the event is caused by the enrolee device starting to consume power.

25. The device of any of claims 23 - 24 wherein the device conforms to the CSA Matter standard.

26. A computer program product, storable on a computer-readable medium, arranged, when run on a computer, to execute the method of any of claims 1 - 16.
